# EUROPEAN PATENT SPECIFICATION

(11) **EP 2 839 822 B1**
(45) Date of publication and mention of the grant of the patent: **13.07.2016**
(21) Application number: 13874987.4
(22) Date of filing: 02.05.2013
(51) Int. Cl.: A61J 3/00

(54) **DEFROSTING DEVICE**
ABTAUVORRICHTUNG
DISPOSITIF DE DÉCONGÉLATION

(30) Priority: 14.02.2013 JP 2013026171
(43) Date of publication of application: 25.02.2015
(73) Proprietor: Hokuyo-Denki Kabushiki Kaisha, Fukushima 963-5321 (JP)
(72) Inventor: TAKIZAWA, Kiyoshi, Higashi-Shirakawa-gun Fukushima 963-5321 (JP)
(74) Representative: Schön, Christoph
(86) International application number: PCT/JP2013/062748
(87) International publication number: WO 2014/125660

(56) References cited:
- JP-A- H1 079
- JP-A- S4 866 894
- JP-A- 2007 061 245
- JP-B2- 4 997 638
- US-A1- 2004 265 168
- US-A1- 2007 127 901

## Description

### Technical Field

The present invention relates to thawing devices to thaw a frozen matter of liquid contained in a bag.

### Background Art

A conventionally known thawing devices of this type is configured to, as illustrated in FIG. 4 of the following Patent Literature 1, hang and hold a bag between two heating plates 64 and 66, and oscillate the heating plate 64 on one side by a driving force of a motor 84 (via an oscillating crank 72 and a spring-dashpot module 74).

### Citation List

### Patent Literature

Patent Literature 1: U.S. Patent 7011797

### Summary of Invention

### Technical Problem

Although such a conventional thawing device can keep the bag in close contact with the heating plates, the contents in the bag do not flow well during the thawing process, and so it is difficult to improve the thawing rate.

That is, the temperature of the contents rises quickly at a part close to the bag surface that is in contact with a heating plate out of the whole contents in the bag and so the contents at the part melt to be liquid, but then the temperature of the bag surface becomes closer to the temperature of the heating plate as time passes, meaning a small difference in temperature therebetween and resulting in decrease of heat transfer to the bag and so deterioration of the thawing efficiency.

To avoid this, an available method is to agitate liquid present between a frozen matter left at a part close to the bag center and the bag surface area to flow, thus causing thermal exchange in the bag, and preventing a decrease of heat transfer and so improving the thawing rate.

For instance, the oscillation stroke of a movable plate on one side may be increased positively to provide oscilating movement. However, if the oscillation stroke of the movable plate is increased when the contents in the bag are still frozen partially, the bag may be damaged due to impact from the movable plate, and so the oscillation stroke of the movable plate needed to be increased after checking whether the contents in the bag have been thawed or not.

In view of such circumstance, it is an object of the present invention to provide a thawing device capable of suppressing an excessive force from being applied to a bag when the contents in the bag are frozen, and decreasing the possibility of a damage of the bag, and capable of promoting the agitation of the contents in the bag during thawing of the contents in the bag, and so improving the thawing rate greatly.

### Solution to Problem

A thawing device according to a first aspect is configured to thaw a frozen matter of liquid contained in a bag, and includes: a supporting unit that supports the bag; a first heater and a second heater that are opposed via the supporting unit; a guide mechanism having a path that descends gradually toward the second heater, the first heater being supported at the path to be movable back and forth; and a driving unit that drives the second heater so as to incline an opposed angle of the second heater with respect to the first heater in a predetermined direction with a predetermined period.

According to the thawing device as the first aspect, the first heater descends gradually toward the second heater while following the path of the guide mechanism (descends while coming closer to the bag), and a component force in the travelling direction of the self-weight of the first heater acts on the bag as a biasing force.

Herein, the component force in the travelling direction refers to the horizontal component force of the self-weight of the first heater that is generated on the path of the guide mechanism when the first heater and the second heater are opposed in the horizontal direction, and refers to the vertical component force of the self-weight of the first heater that is generated on the path of the guide mechanism when the first heater and the second heater are opposed in the vertical direction, such that the first heater is at the upper side and the second heater is at the lower side.

The second heater that is opposed to the first heater is driven by the driving unit so that the opposed angle with respect to the first heater is inclined in a predetermined direction with a predetermined period. The opposed angle of the second heater 2 with respect to the first heater, the inclination direction and the period may be set appropriately.

This configuration allows a biasing force to always act from the first heater to the bag, and so close-contact between the first heater, the second heater and the bag is enhanced by a reactive force of the biasing force acting on the second heater via the bag. This results in decrease of loss of heat transfer from the first heater and the second heater to the bag, and so the thawing rate can be improved greatly.

Additionally, the second heater acts the pressing force at different areas of the bag with a predetermined period, and so the bag is deformed as the contents of the bag are thawed process, and agitation of the contents of the bag is promoted during the thawing. This can improve the thawing rate greatly.

When the pressing force of the second heater partially acts on the bag, the first heater that is supported to be movable back and forth in the path moves backward, whereby an excessive pressing force applied to the bag can be alleviated.

In this way, even when the second heater presses the bag in the frozen state, the possibility of a damage of the bag in the frozen state, which results from an excessive pressing force concentrating on a part of the bag in the frozen state, can be reduced.

The heater has a heat-generation unit, and the contents in the bag are heated by bringing the surface of the heater in contact with the surface of the bag. The heat-generation unit used may be an appropriate one such as an electrical heater that generates heat upon energization or a fluid heater, through which heating fluid is allowed to pass.

The supporting unit to support the bag may be in the form of being attached to the frame of the thawing device, being attached to the first heater, or being attached to the second heater.

A thawing device as a second aspect according to the first aspect is configured so that the guide mechanism includes a slide guide that is disposed at a frame of the thawing device as a path that descends gradually toward the second heater, and the first heater is supported at the slide guide to be slidable.

According to the thawing device as the second aspect, the guide mechanism includes a slide guide, thereby letting the first heater descend gradually toward the second heater (descend while coming closer to the bag), and letting a component force in the travelling direction of the self-weight of the first heater act on the bag as a biasing force.

The thawing device as a third aspect according to the first aspect is configured so that the guide mechanism includes a link member having a fixed end supported at a frame of the thawing device and a free end having a path that descends gradually toward the second heater, and the first heater is supported at the free end of the link member. According to the thawing device as the third aspect, the guide mechanism includes a link member, in which the first heater is supported on the free-end side, whereby letting the first heater descend gradually toward the second heater (descends while coming closer to the bag), and letting a component force in the travelling direction of the self-weight of the first heater act on the bag as a biasing force.

The thawing device as fourth aspect according to any one of the first to the third aspects is configured so that the guide mechanism includes a fixing unit that fixes the first heater at a position separated from the bag. According to the thawing device as the fourth aspect, the first heater descends while coming closer by the guide mechanism, thus letting a component force in the travelling direction of the self-weight act on the bag as a biasing force, meaning that the biasing force will act on the bag when the bag is attached/detached from the supporting unit as well. As such, the thawing device is configured to fix the first heater at a position separated from the bag by the fixing unit, thus facilitating attachment/detachment of the bag to the device.

The thawing device as a fifth aspect according to any one of the first to the fourth aspects is configured so that the supporting unit includes a saclike container, in which the bag can be stored, and a supporting frame configured to support the container with an opening of the container being on the upside, and the supporting frame is supported at the first heater of the thawing device.

According to the thawing device as the fifth aspect, the supporting unit includes a supporting frame and a container having an opening on its upper side. This can prevent the contents from scattering when the bag is aligned or when the bag breaks, and facilitates loading and unloading of the bag into the container from the opening on the upper side.

Additionally, since the supporting unit is supported at the first heater for integration, the bag stored in the container is in the close-contact state with the first heater and can be supported at the guide mechanism to be movable back and forth.

This means that, when the first heater gradually descends toward the second heater while following the path of the guide mechanism, a component force in the travelling direction of the total weight including the self-weight of the first heater and the weights of the supporting frame, the container and the bag acts on the second heater as the biasing force, and so the first heater, the second heater and the bag can be in a close-contact state while receiving a reactive force of the biasing force.

Further, since the supporting frame is supported at the first heater for integration, when a pressing force acts on the bag with the driving of the second heater, the bag and the first heater integrally move backward while following the path of the guide mechanism, and so a close-contact state of the bag and the first heater can be maintained.

As a result, compared with the case where the supporting frame is disposed at a frame or the like of the thawing device, close-contact of the first heater and the second heater with the bag can be further improved when the supporting frame is supported at the first heater, and so loss of heat transfer can be reduced, and accordingly the thawing duration of the contents of the bag can be shortened.

### Brief Description of Drawings

FIG. 1 is a perspective view illustrating a thawing device of the present embodiment.
FIG. 2A, FIG. 2B, and FIG. 2C describe the operation state of the thawing device of FIG. 1 at the initial stage of the thawing.
FIG. 3A, FIG. 3B, FIG. 3C, and FIG. 3D describe the operation state of the thawing device of FIG. 1 at the middle stage of the thawing.
FIG. 4A, FIG. 4B, and FIG. 4C describe the operation state of the thawing device of FIG. 1 at the late stage of the thawing.
FIG. 5 describes the states of the respective stages of FIGs. 2 to 4.
FIG. 6A, FIG. 6B, and FIG. 6C describe a modification example of the thawing device of FIG. 1.
FIG. 7 describes another modification example of the thawing device of FIG. 1.
FIG. 8 describes still another modification example of the thawing device of FIG. 1.

### Description of Embodiments

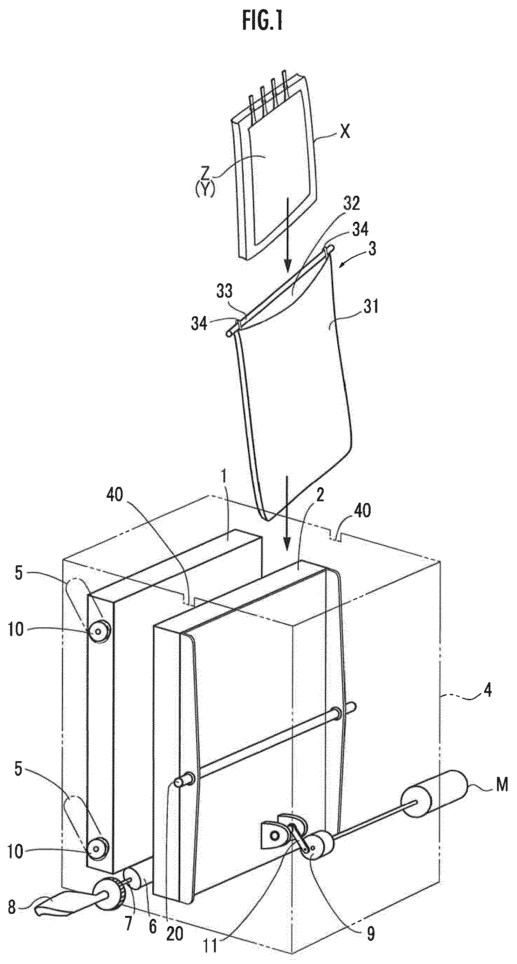

As illustrated in FIG. 1, a thawing device of the present embodiment is to thaw a plate-like frozen matter Z that is prepared by freezing liquid Y (e.g., plasma derivatives) and is contained in a bag X (e.g., a plasma derivatives bag), and includes a plate-like first heater 1 and a plate-like second heater 2 that are opposed in the horizontal direction, and supporting unit 3 to support the bag X between the first heater 1 and the second heater 2.

The first heater 1 is supported at a pair of guide grooves 5, 5 (corresponding to a slide guide as a path configuring a guide mechanism of the present invention) that is disposed in parallel above and below inclined downward at a side face of a box-shaped casing 4 (corresponding to a frame of the present invention) of the thawing device while keeping a standing state.

The first heater 1 is provided with wheels 10 at parts closer to both ends so as to correspond to the guide grooves 5, and sliding of the wheels 10 in the guide grooves 5 makes the first heater 1 movable along the guide grooves 5 while keeping the standing state.

On the lower-end side of the first heater 1, a lock piece 6 as a fixing unit is rotatably attached to a shaft 7. The shaft 7 is supported at the casing 4 and is rotatable by a handle 8 that protrudes from the casing 4. Then rotation of the handle 8 makes the lock piece 6 push the lower end of the heater 1 upward while fixing the same temporarily in the push-up state.

The second heater 2 is supported at the casing 4 via a supporting shaft 20 that extends horizontally at the middle position of its vertical direction.

Then the second heater 2 on the lower end side is rotatably supported at the forward-end side of a joint arm 11 that is eccentrically supported by a rotating body 9 jointed to a driving shaft of an electric motor M (corresponding to a driving unit of the present invention). When the electric motor M is driven, the second heater 2 moves back and forth while inclining the upper side and the lower side alternately toward the first heater 1, whereby the opposed angle of the second heater 2 to the first heater 1 changes with a predetermined period.

The supporting unit 3 includes a sack-like container 31 in which the bag X can be stored, and a supporting frame 33 to support the container 31 with its opening 32 upward.

The container 31 is made of transparent or semi-transparent flexible resin, and has durability against heat and impact from the first heater 1 and the second heater 2. The container 31 is further provided with hangers 34, 34 at both edges of the opening 32, for hanging the container 31 to the supporting frame 33. The supporting frame 33 is a rod-like member, and has both ends that engage concaves 40, 40 provided at the upper end of the side walls of the casing 4 for holding.

That is the configuration of the thawing device of the present embodiment.

Next, the following describes how to use the thawing device of the present invention, with reference to FIGs. 1 to 5.

To begin with, as illustrated in FIG. 1, in order to thaw a frozen matter Z in the bag X, a user hangs the hangers 34, 34 of the container 31 at both ends of the supporting frame 33 to integrate the container 31 and the supporting frame 33.

Next, the user inserts the bag X in the container 31 from the opening 32, and inserts the container 31 with the bag X inserted therein between the first heater 1 and the second heater 2 until the both ends of the supporting frame 33 engage the concaves 40, 40 of the casing 4.

At this time, the user rotates the handle 8 beforehand so that the first heater 1 is fixed at a backward position from the second heater 2 via the lock piece 6, whereby the user can easily insert the container 31 with the bag X inserted therein between the first heater 1 an the second heater 2.

In this case, since the first heater 1 and the second heater 2 are separated, the empty container 31 without the bag X inserted therein may be inserted between the first heater 1 and the second heater 2 and after the both ends of the supporting frame 33 engage the concaves 40, 40 of the casing 4, the bag X may be inserted in the container 31 at the time of heating.

Next, the user rotates the handle 8 inversely from the above to cancel the engagement of the lock piece 6 with the first heater 1, so that the wheels 10 of the first heater 1 slide along the guide grooves 5 and the first heater 1 accordingly descends while becoming closer to the bag X.

At this time, a horizontal component force of the self weight of the first heater 1 in the travelling direction (the longitudinal direction of the guide grooves 5) continuously acts on the bag X, and then a reactive force of a biasing force acting on the second heater via the bag acts, so that close-contact between the first heater, the second heater and the bag is enhanced. This results in decrease of loss of heat transfer from the first heater and the second heater to the bag.

Further, when the second heater 2 pushes the bag from the opposite side of the first heater 1 while acting the pressing force at different areas of the bag alternately with a predetermined period, the second heater 2 is allowed to follow the bag X without completely separating from the bag in a state the first heater 1 being in close contact with the bag X, whereby the bag X is deformed as the contents of the bag X are thawed, and agitation of the contents of the bag is promoted during the thawing. This enables efficient heating of the bag X by the first heater 1 and the second heater 2.

That is the details of preprocessing to attach and the like the bag X to the thawing device of the present embodiment.

Next, the following describes the thawing processing by heating of the bag X using the thawing device of the present embodiment.

To begin with, a user feeds electricity to the first heater 1 and the second heater 2 from a power supply (not illustrated) to heat the first heater 1 and the second heater 2.

Next, the user drives the electric motor M to move the second heater 2 back and forth so that the upper side and the lower side of the second heater 2 are inclined and come close to and go backward from the first heater 1 alternately with a predetermined period, thus acting a pressing force on the bag X to the upper side and the lower side repeatedly. Then, a part of this pressing force acts on the first heater via the bag X, and the first heater 1 accordingly goes backward from and comes close to the second heater 2 repeatedly.

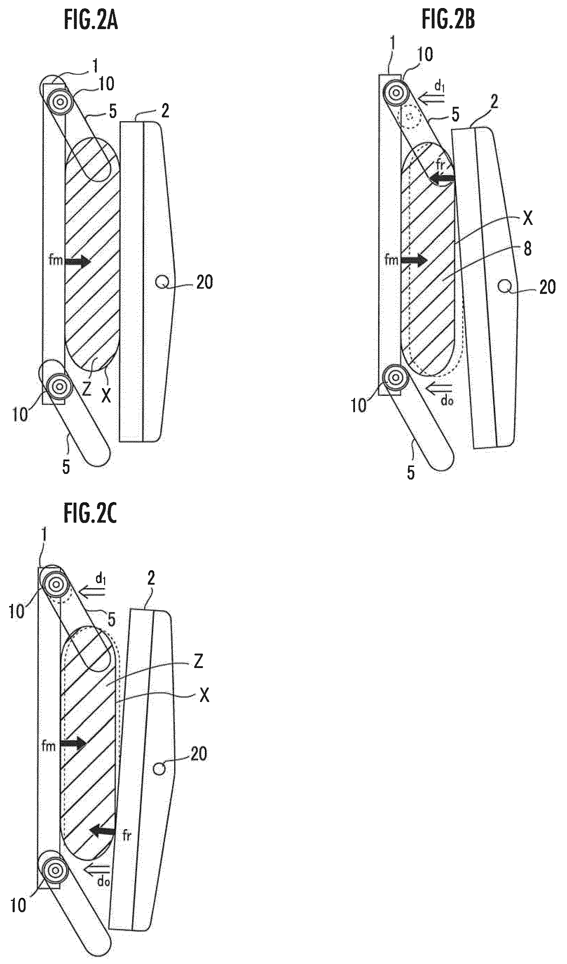

Referring to FIGs. 2 to 5, the following describes this state, where (A) is in the state where liquid Y is frozen, (B) is in the partially thawed state, and (C) is in the entirely thawed state.

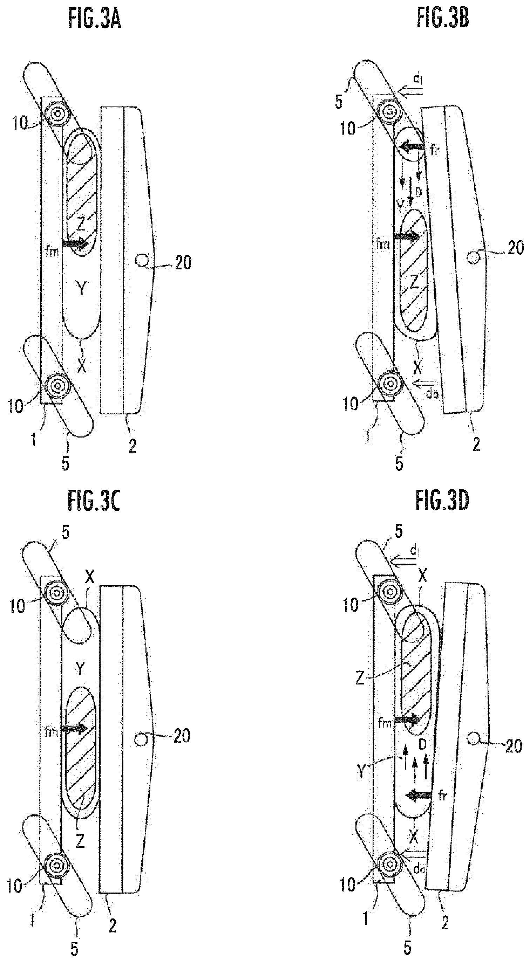

Firstly, referring to FIG. 2, the following describes the state of A where liquid Y is frozen. FIG. 2A illustrates the state prior to the action of the second heater 2, and FIG. 2B illustrates the state where the second heater 2 is acting so that the upper side of the second heater 2 moves close to the bag X side. FIG. 2C illustrates the state where the second heater 2 is acting so that the lower side of the second heater 2 moves close to the bag X side. FIGs. 2A to C omit the illustration of the container 31 (the same goes for FIG. 3 to FIG. 4).

To begin with, in the initial state prior to the action of the second heater 2 of FIG. 2A, a biasing force fin due to a horizontal component force of the self weight of the first heater 1 acts on the bag X, and so the first heater 1, the second heater 2 and the bag X are brought into close contact with each other because they receive a reactive force of the biasing force fin acting on the second heater 2 via the bag X. Herein the drawing shows the horizontal component force only of the biasing force fin with the arrow (the same goes for FIG. 2B, C, FIG. 3 and FIG. 4).

Next, in the state of FIG. 2B where the electric motor M is driven to move the second heater 2, the supporting shaft 20 rotates counterclockwise by a predetermined angle in the drawing, so that the upper side of the second heater 2 is inclined toward the first heater 1 side to let a pressing force fr act to press the upper side of the bag X. This deforms the bag X by the deformation amount d0 and moves the first heater 1 backward along the guide grooves 5 by a backward amount d1. When liquid Y is frozen, the bag X hardly is deformed, and so the deformation amount d0 is approximately 0, and so an excessive force acting on the bag X is alleviated because the first heater 1 moves backward greatly by the backward amount d1 along the guide grooves 5, and so the possibility of a damage of the bag X is reduced.

Herein, the deformation amount d0 of the bag X and the backward amount d1 of the first heater 1 are set at 0 at their respective positions in the initial state (the same goes for FIG. 2C, FIG. 3 and FIG. 4). The drawing shows a horizontal component force of the backward amount d1 only with the arrow (the same goes for FIG. 2C, FIG. 3 and FIG. 4).

From the state of FIG. 2B to the state of FIG. 2C, the supporting shaft 20 rotates clockwise by a predetermined angle in the drawing, and once they go through the initial state of FIG. 2A, then the lower side of the second heater 2 is inclined toward the first heater 1 to let a pressing force fr act to press the lower side of the bag X. This deforms the bag X again by the deformation amount d0 and moves the first heater 1 backward along the guide grooves 5 by the backward amount d1.

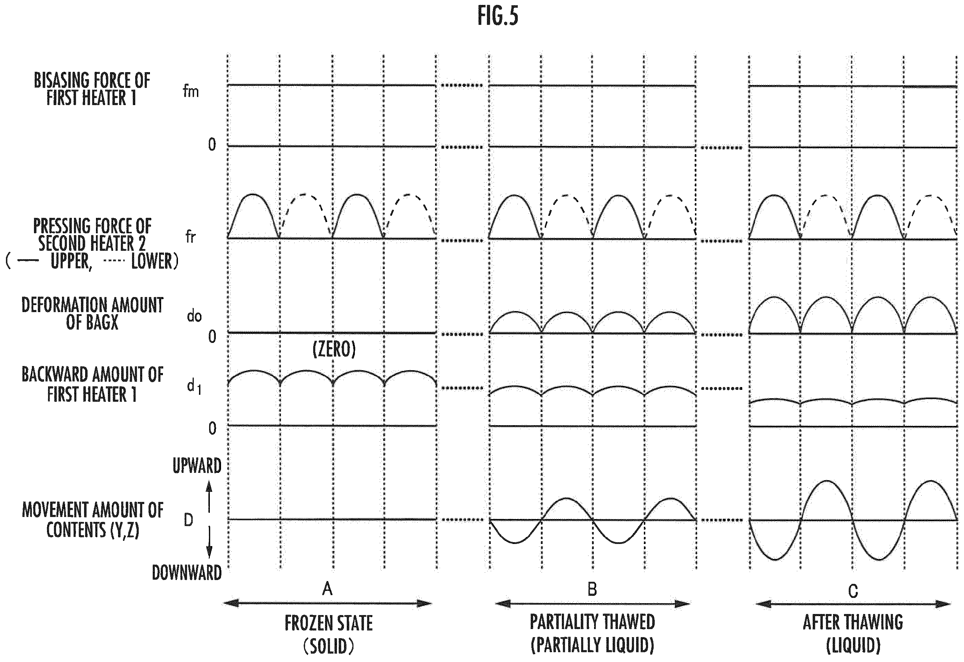

Then, the above process is repeated in the state (A) where liquid Y is frozen. FIG. 5 (left side of FIG. 5) illustrates this state. Since there is no liquid Y in the bag X in the state (A) where liquid Y is frozen, the amount D of movement of the contents (frozen matter Z) in the bag X is 0.

Next, referring to FIG. 3, the following describes the state of (B) where frozen mater Z is partially thawed. FIG. 3A illustrates the initial state prior to the action of the second heater 2. FIG. 3B illustrates the state where the upper side of the second heater 2 moves closer to the bag X side from the state of FIG. 3A. FIG. 3C illustrates the state where they return to the initial state from the FIG. 3B. FIG. 3D illustrates where the lower side of the second heater 2 moves closer to the bag X side from the state of FIG. 3C.

To begin with, in the state of FIG. 3A, similarly to FIG 2, a biasing force fin due to a horizontal component force of the self weight of the first heater 1 acts on the bag X, and so the first heater 1, the second heater 2 and the bag X are brought into close contact with each other because they receive a reactive force of the biasing force fm acting on the second heater 2 via the bag X.

Next, in the state of FIG. 3B, the supporting shaft 20 rotates counterclockwise by a predetermined angle in the drawing, so that the upper side of the second heater 2 is inclined toward the first heater 1 to let a pressing force fr act to press the upper side of the bag X. At this time, the bag X is deformed by the deformation amount d0, and thereby the first heater 1 moves backward along the guide grooves 5 by a backward amount d1, and liquid Y and a frozen part Z of the contents in the bag move downward by the movement amount D. Especially the frozen matter Z as solid is pushed downward and moves greatly. This makes the deformation amount d0 of the bag X larger than the state of FIG. 2 where liquid Y is frozen, and the backward amount d1 of the first heater 1 becomes smaller than the state where liquid Y is frozen.

Next, as illustrated in FIG. 3C, the upper side of the second heater 2 moves backward once, and then as illustrated in FIG. 3D the supporting shaft 20 rotates clockwise by a predetermined angle in the drawing so that the lower side of the second heater 2 is inclined toward the first heater 1 side to let a pressing force fr act to press the lower side of the bag X. This deforms the bag X again by the deformation amount d0 and accordingly moves the first heater 1 backward along the guide grooves 5 by the backward amount d1, and moves liquid Y and the frozen part Z of the contents in the bag upward by the movement amount D. Especially the frozen matter Z as solid is pushed upward and moves greatly. This makes, similarly to FIG. 3B, the deformation amount d0 of the bag X larger than the state of FIG. 2 where liquid Y is frozen, and the backward amount d1 of the first heater 1 becomes smaller than the state where liquid Y is frozen.

Then, the above process is repeated in the partially thawed state (B). FIG. 5 (center of FIG. 5) illustrates this state.

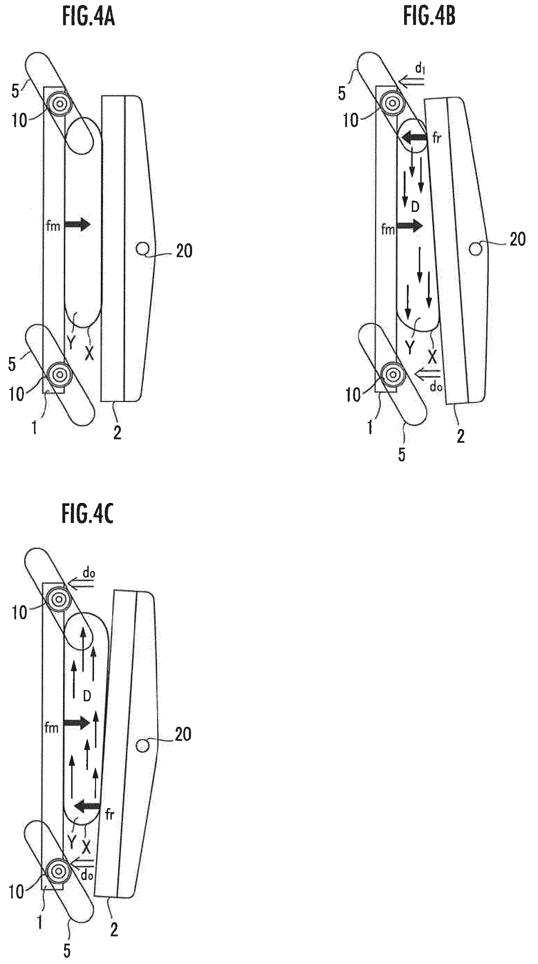

Next, referring to FIG. 4, the following describes the state of (C) where frozen matter Z is entirely thawed. FIG. 4A illustrates the initial state prior to the action of the second heater 2, and FIG. 4B illustrates the state where the upper side of the second heater 2 moves closer to the bag X from the state of FIG. 4A. FIG. 4C illustrates the state where the lower side of the second heater 2 moves closer to the bag X side from the state of FIG. 4B.

To begin with, in the state of FIG. 4A, similarly to FIG 2 and FIG. 3, a biasing force fm due to a horizontal component force of the self weight of the first heater 1 acts on the bag X, and so the first heater 1, the second heater 2 and the bag X are brought into close contact with each other because they receive a reactive force of the biasing force fm acting on the second heater 2 via the bag X.

Next, in the state of FIG. 4B, the supporting shaft 20 rotates counterclockwise by a predetermined angle in the drawing, so that the upper side of the second heater 2 is inclined toward the first heater 1 side to let a pressing force fr act to press the upper side of the bag X. At this time, the bag X is deformed by the deformation amount d0, and thereby the first heater 1 moves backward along the guide grooves 5 by a backward amount d1.

In the state where the frozen matter Z in the bag X is entirely thawed to be liquid Y, the deformation amount d0 of the bag X becomes larger than the state of FIG. 3 where frozen matter Z is partially thawed, and the backward amount d1 of the first heater 1 becomes smaller than the state of FIG. 3 where frozen matter Z is partially thawed.

Next, as illustrated in FIG. 4C, once the upper side of the second heater 2 moves backward and goes through the initial state, then the pressing force fr acts so that the lower side of the second heater 2 presses the lower side of the bag X.

At this time, liquid Y of the contents in the bag moves by the movement amount D. Then, the bag X is deformed by the deformation amount d0, and thereby the first heater 1 moves backward along the guide grooves 5 by a backward amount d1. This makes, in the state where the frozen matter Z in the bag X is entirely thawed to be liquid Y, similarly to FIG. 4B, the deformation amount d0 of the bag X is larger than the state of FIG. 3 where frozen matter Z is partially thawed, and the backward amount d1 of the first heater 1 is smaller than the state of FIG. 3 where the frozen matter Z is partially thawed.

Then, the above process is repeated in the state (C) where frozen matter Z is entirely thawed. FIG. 5 (right side of FIG. 5) illustrates this state.

As illustrated in FIG. 5, the backward amount d1 of the first heater 1 of the thawing device of the present embodiment is the largest in the state (A) where the contents in the bag X are frozen, followed by the state (B) where it is partially thawed, and the state (C) where it is entirely thawed, having the smallest amount. That is, the backward amount d1 of the first heater 1 has the relationship of (A)>(B)>(C). The thawing device of the present embodiment can reduce the possibility of a damage of the bag X by giving the function to move the first heater 1 backward when the contents of the bag X are in the frozen state (A) and are in the partially thawed state (B), and thereby alleviating an excessive force acting on the bag when such an excessive force is applied to the bag X.

As the contents of the bag X are gradually thawed from the frozen state (A) and the partially-thawed state (B) to the entirely-thawed state (C), the deformation amount d0 of the bag X, i.e., the movement amount D of the contents of the bag X increases. That is, the deformation amount d0 of the bag X, i.e., the movement amount D of the contents of the bag X has the relationship of (A)<(B)<(C). This can promote the agitation of the contents of the bag during thawing process, whereby the thawing rate can be improved greatly.

In this way, the thawing device of the present embodiment can reduce the possibility of a damage of the bag X and can improve the thawing rate greatly. The thawing device of the present embodiment includes the guide grooves 5 and the wheels 10 as the guide mechanism, which is not a limiting example, and the mechanism of the slide guide may be a rail or the like, for example.

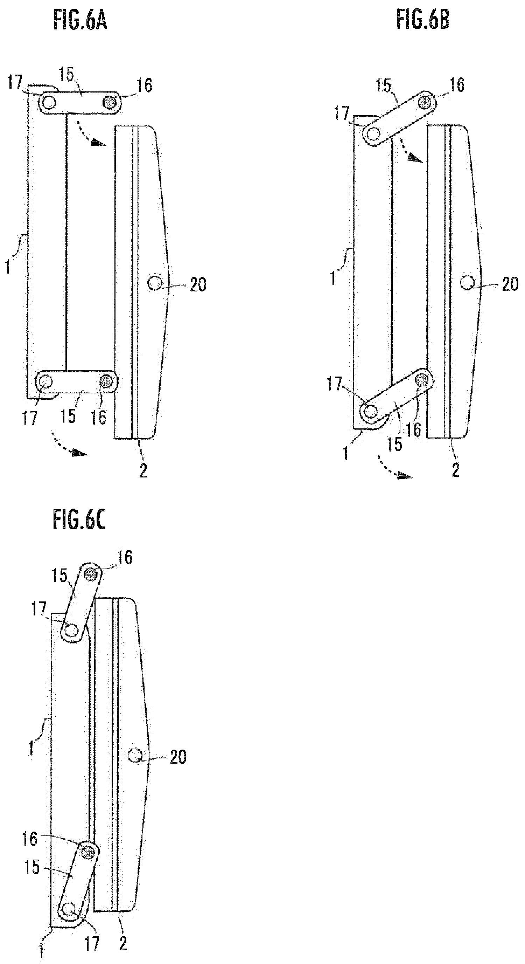

As illustrated in FIG. 6, instead of the slide guide, a link member 15 may be used as the guide mechanism. In FIG. 6, the link member 15 has a fixed end at one end that is rotatably attached to the casing 4 or the like via a shaft 16 and a free end at the other end that is rotatably attached to the first heater 1 via a shaft 17. The free end moves along the path as shown with the arrow in the drawing where it descends while coming closer to one plate face of the bag X.

As supplemental information, FIG. 6A illustrates the state where the first heater 1 is pushed upward by the lock piece 6 (not illustrated) to be fixed. FIG. 6B illustrates the state where releasing of the lock piece 6 from the state of FIG. 6A generates torque around the shaft 16 on the fix end side due to its self weight. FIG. 6C illustrates the state where the first heater 1 is getting closer to the second heater 2 while further descending from the state of FIG. 6B.

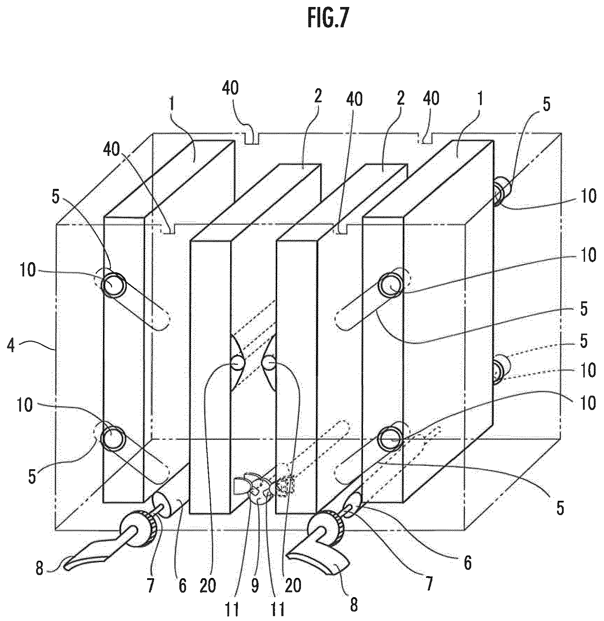

The present embodiment describes the case where only one bag X is heated, which is not a limiting example, and a plurality of bags X may be heated at one time. For instance, as illustrated in FIG. 7, two second heaters 2 are opposed to be adjacent to each other, and the lower ends of each of the second heaters 2 are jointed to one rotating body 9 via joint arms 11, thus letting the two second heaters 2 opposed to be adjacent to each other act in a seesaw manner at one time.

In this case, similarly to the case of heating only one bag X, a bag X is disposed between a first heater 1 on the other side and one second heater 2 for use. That is, the bag X put in the container 31 is used while engaging the supporting frame 33 with concaves 40, 40 on the other side of the casing 4. In such a configuration, when only one of the bags X is to be heated, the handle 8 on the side that is not used is manipulated so that the first heater 1 on the side that is not used is fixed at a backward position from the second heater 2 by the lock piece 6. At this time, electricity is not fed to the first heater 1 and the second heater 2 on the other side that is not used. Although a user may operate the power supply so as not to feed electricity to the first heater 1 and the second heater 2 on the other side that is not used, the position of the first heater 1 (e.g., the position where the first heater 1 is separated from the second heater 2) or a contact of the first heater 1 with the lock piece 6 may be detected, and electricity to the first heater 1 and the second heater 2 on the other side that is not used may be stopped automatically.

When a plurality of first heaters 1 and second heaters 2 are provided, they may be disposed in parallel. In this case, a plurality of crank shafts are provided on the driving shaft of the electric motor M, which are jointed to lower ends of the corresponding second heaters 2, whereby such a plurality of second heaters 2 disposed in parallel can be operated in a seesaw manner at one time.

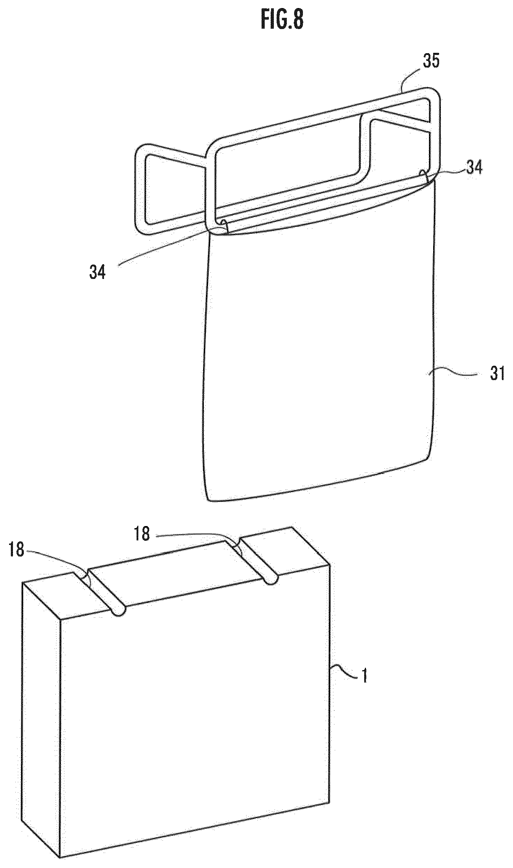

The present embodiment describes the case where the first heater 1 and the second heater 2 are opposed in the horizontal direction. This is not a limiting example, and the first heater 1 and the second heater 2 may be opposed in the vertical direction so that the first heater 1 is located above. In this case, a biasing force acting on the first heater 1 is a vertical component force of the self weight of the first heater 1 that is generated on the path of the guide mechanism. The present embodiment is configured so that the bag X is attached to the casing 4 by engaging the supporting unit 3 with the concaves 40,40 of the casing 4 of the thawing device. This is not a limiting example. For instance, as illustrated in FIG. 8, the supporting unit may be attached to the first heater 1. In this case, the supporting unit 3 may be a supporting frame 35 that has a shape corresponding to guide grooves 18 at the top face of the first heater 1, whereby the supporting frame 35 can be attached to the upper part of the first heater 1 in a fixed manner or detachably for integration. Instead of attaching the bag X to the first heater 1, the bag X may be attached to the second heater 2 using a similar supporting frame 35.

In the thawing device of the present embodiment, the second heater 2 is moved via a crank shaft or the like by the electric motor M as the driving unit. This is not a limiting example, and an actuator, for example, may be used as the driving unit so as to move the second heater 2 directly.

The opposed angle of the second heater 2 with respect to the first heater 1, the inclination direction and the period are not limited to the present embodiment, and they may be set appropriately. In addition to the supporting shaft 20 that supports the second heater 2 horizontally, a vertical supporting shaft may be provided for vertical-supporting at the casing 4 at a middle position in the width direction, whereby the second heater 2 can be inclined by the driving unit in a predetermined direction that is the combination of the inclination around the horizontal shaft and around the vertical shaft with a predetermined period.

### Description of Reference Numerals

1... first heater, 2... second heater, 3... supporting unit, 4... casing (frame of the thawing device), 5... guide groove (slide guide (guide mechanism)), 6... lock piece (fixing unit), 8... handle, 9...rotating body , 10... wheel, 11...joint arm, 15... link member, 16... shaft (fixed end), 17... shaft (free end), 20... supporting shaft, 31... container, 32... opening, 33, 35...supporting frame, X... bag, Y... liquid, Z... frozen matter

## Claims

1. A thawing device configured to thaw a frozen matter of liquid contained in a bag, comprising:
a supporting unit (3) that supports the bag;
a first heater and a second heater (1, 2) that are opposed via the supporting unit;
a guide mechanism having a path that descends gradually toward the second heater, the first heater being supported at the path to be movable back and forth; and
a driving unit (M) that drives the second heater so as to incline an opposed angle of the second heater with respect to the first heater in a predetermined direction with a predetermined period.

2. The thawing device according to claim 1, wherein
the guide mechanism includes a slide guide (5) that is disposed at a frame of the thawing device as a path that descends gradually toward the second heater, and
the first heater is supported at the slide guide to be movable back and forth.

3. The thawing device according to claim 1, wherein
the guide mechanism includes a link member (15) having a fixed end supported at a frame of the thawing device and a free end having a path that descends gradually toward the second heater, and
the first heater is supported at the free end of the link member.

4. The thawing device according to any one of claims 1 to 3, wherein
the guide mechanism includes a fixing unit (6) configured to fix the first heater at a position separated from the bag.

5. The thawing device according to any one of claims 1 to 4, wherein
the supporting unit includes a sack-like container (31), in which the bag can be stored, and a supporting frame (33) configured to support the container with an opening of the container being upside, and
the supporting frame is supported at the first heater of the thawing device.

## Patentansprüche

1. Auftauvorrichtung, die zum Auftauen eines gefrorenen Flüssigkeitsmaterials, das in einem Beutel enthalten ist, konfiguriert ist, umfassend:
eine Unterstützungseinheit (3), die den Beutel unterstützt;
eine erste Heizeinrichtung und eine zweite Heizeinrichtung (1, 2), die sich über die Unterstützungseinheit gegenüber liegen;
einen Führungsmechanismus, der einen Pfad aufweist, der allmählich in Richtung der zweiten Heizeinrichtung abfällt, wobei die erste Heizeinrichtung an dem Pfad unterstützt wird, um rückwärts und vorwärts bewegbar zu sein; und
eine Antriebseinheit (M), welche die zweite Heizeinrichtung derart antreibt, dass sich ein gegenüberliegender Winkel der zweiten Heizeinrichtung bezüglich der ersten Heizeinrichtung in einer vorbestimmten Richtung mit einer vorbestimmten Dauer neigt.

2. Auftauvorrichtung nach Anspruch 1, wobei der Führungsmechanismus eine Gleitführung (5) beinhaltet, die auf einem Rahmen der Auftauvorrichtung als ein Pfad angeordnet ist, der allmählich in Richtung der zweiten Heizeinrichtung abfällt, und wobei die erste Heizeinrichtung an der Gleitführung unterstützt ist, um vorwärts und rückwärts bewegbar zu sein.

3. Auftauvorrichtung nach Anspruch 1, wobei der Führungsmechanismus ein Verbindungselement (15) beinhaltet, bei dem ein feststehendes Ende an einem Rahmen der Auftauvorrichtung unterstützt ist, und ein freies Ende, das einen Pfad aufweist, der allmählich in Richtung der zweiten Heizeinrichtung abfällt, und wobei die erste Heizeinrichtung an dem freien Ende des Verbindungselements unterstützt ist.

4. Auftauvorrichtung nach einem der Ansprüche 1 bis 3, wobei der Führungsmechanismus eine Fixierungseinheit (6) beinhaltet, die konfiguriert ist, um die erste Heizvorrichtung in einer Position, die vom Beutel getrennt ist, zu fixieren.

5. Auftauvorrichtung nach einem der Ansprüche 1 bis 4, wobei die Unterstützungseinheit einen sackähnlichen Behälter (31) beinhaltet, in welchem der Beutel gelagert werden kann, und einen Unterstützungsrahmen (33), der konfiguriert ist, um den Behälter zu unterstützen, wobei eine Öffnung des Behälters oben liegt, und
wobei der Unterstützungsrahmen an der ersten Heizeinrichtung der Auftauvorrichtung unterstützt wird.

## Revendications

1. Dispositif de décongélation configuré pour décongeler une matière congelée de liquide contenue dans un sac, comprenant :
une unité de support (3) qui supporte le sac ;
un premier élément chauffant et un deuxième élément chauffant (1, 2) qui sont opposés via l'unité de support ;
un mécanisme de guidage ayant un chemin qui descend progressivement vers le deuxième élément chauffant, le premier élément chauffant étant supporté au niveau du chemin pour pouvoir se mouvoir dans le sens aller et retour ; et
une unité d'entraînement (M) qui entraîne le deuxième élément chauffant de manière à incliner un angle opposé du deuxième élément chauffant par rapport au premier élément chauffant dans une direction prédéterminée avec une période prédéterminée.

2. Dispositif de décongélation selon la revendication 1, dans lequel
le mécanisme de guidage comprend une glissière (5) qui est disposée au niveau d'un cadre du dispositif de décongélation en tant que chemin qui descend progressivement vers le deuxième élément chauffant, et
le premier élément chauffant étant supporté au niveau de la glissière pour pouvoir se mouvoir dans le sens aller et retour.

3. Dispositif de décongélation selon la revendication 1, dans lequel
le mécanisme de guidage comprend un élément de liaison (15) ayant une extrémité fixe supportée au niveau d'un cadre du dispositif de décongélation et une extrémité libre ayant un chemin qui descend progressivement vers le deuxième élément chauffant, et
le premier élément chauffant étant supporté à l'extrémité libre de l'élément de liaison.

4. Dispositif de décongélation selon l'une quelconque des revendications 1 à 3, dans lequel
le mécanisme de guidage comprend une unité de fixation (6) configurée pour fixer le premier élément chauffant dans une position séparée du sac.

5. Dispositif de décongélation selon l'une quelconque des revendications 1 à 4, dans lequel
l'unité de support comprend un contenant (31) semblable à un sac dans lequel le sac peut être stocké, et un cadre de support (33) configuré pour supporter le contenant avec une ouverture du contenant se trouvant sur le haut, et
le cadre de support étant supporté au niveau du premier élément chauffant du dispositif de décongélation.
